# EUROPÄISCHE PATENTSCHRIFT

(11) **EP 0 875 410 B1**
(45) Veröffentlichungstag und Bekanntmachung des Hinweises auf die Patenterteilung: **04.06.2003**
(21) Anmeldenummer: 98810348.7
(22) Anmeldetag: 21.04.1998
(51) Int. Cl.: B60K 13/04, F01N 7/08

(54) **Abgasanlage für ein Kraftfahrzeug sowie Kraftfahrzeug**
Exhaust apparatus for a motor vehicle as well as a motor vehicle
Dispositif d'échappement pour véhicules automobiles, ainsi que pour un véhicule automobile

(30) Priorität: 28.04.1997 CH 98897
(43) Veröffentlichungstag der Anmeldung: 04.11.1998
(73) Patentinhaber: SCAMBIA INDUSTRIAL DEVELOPMENTS AKTIENGESELLSCHAFT, 9494 Schaan (LI)
(72) Erfinder: Alexnat, John W. Jörg, 3700 Tongeren (BE); Steenackers, Pieter Delfina, Dr., 3030 Heverlee (BE)
(74) Vertreter: Eder, Carl E.

(56) Entgegenhaltungen:
- DE-A- 3 137 746
- US-A- 5 195 607

## Beschreibung

Die Erfindung betrifft eine Abgasanlage gemäss dem Oberbegriff des Anspruchs 1. Die Abgasanlage ist zum Beispiel für einen Personenkraftwagen vorgesehen, kann jedoch eventuell auch für ein anderes Kraftfahrzeug - zum Beispiel einen Lastkraftwagen oder Bus - verwendet werden. Der Verbrennungsmotor kann dabei aus einem Benzin- oder Dieselmotor bestehen.

Bei der Verwendung eines Kraftfahrzeugs werden vom Verbrennungsmotor Vibrationen, d.h. Schwingungen, des Motorgehäuses erzeugt. Ferner können schnelle Änderungen der vom Motor abgegebenen Leistung Schwenkbewegungen des Motorgehäuses um eine virtuelle Dreh- und/oder Schwenk-Achse verursachen. Die Schwingungsbewegungen und sonstigen Bewegungen des Motorgehäuses werden über die mechanische Verbindung von diesem mit dem Auspuff auf den letzteren übertragen. Ferner führt der Motor dem Auspuff pulsierend Abgas zu, das auch Schwingungen des Auspuffs anregen kann. Ferner verursachen das Fahren über Löcher und sonstige Unebenheiten, das Fahren von Kurven sowie das Beschleunigen und Bremsen des Fahrzeugs Beschleunigungen des Auspuffs. Der Auspuff wird zudem beim Betrieb des Motors durch das Abgas erhitzt, wobei die Abgastemperatur vom Motor weg entlang dem Strömungsweg abnimmt. Die. Erhitzung bewirkt infolge der thermischen Dehnung der starren Teile des Auspuffs eine vorübergehende Verlängerung von diesen.

Eine gattungsgemässe, aus der DE 31 37 746 A bekannte Abgasanlage besitzt einen Auspuff, der in der Abgas-Strömungsrichtung der Reihe nach ein Rohr, ein deformierbares Leitungselement, einen ersten Schalldämpfer, ein deformierbares Leitungselement, ein Rohr einen zweiten Schalldämpfer und ein Rohr aufweist. Jeder Schalldämpfer besitzt ein Gehäuse. Der Auspuff ist mit Haltemitteln am Fahrzeugkörper gehalten. Die Haltemittel besitzen an den Rohren angreifende Aufhängungen mit Gummiringen. Ähnliche Abgasanlagen mit Gummiringen sind auch aus der Praxis bekannt. Wenn eine Kraft auf einen mit Gummiringen gehaltenen Teil eines Auspuffs ausgeübt wird, stellen die Gummiringe einer Auslenkung des gehaltenen Auspuffteils aus dessen Ruhelage zuerst nur einen sehr kleinen Widerstand entgegen. Erst wenn die Auslenkungen der Auspuffteile gewisse, in der Praxis meistens 1 bis 2 cm oder noch mehr betragende Grenzwerte erreichen, steigt der von den Gummiringen erzeugte Widerstand sprunghaft an. Die von den Haltemitteln gehaltenen Teile können sich also innerhalb der durch die genannten Grenzwerte begrenzten Bereiche fast frei bewegen.

Die deformierbaren Leitungselemente sollen die stromabwärts von ihnen angeordneten Schalldämpfer und sonstigen Auspuffteile schwingungsmässig vom Motor entkoppeln. Da sich die bekannten Auspuffe und insbesondere deren stromabwärts von den deformierbaren Leitungselementen angeordneten Teile innerhalb gewisser Grenzen ziemlich frei bewegen können, werden in den Auspuffen häufig Transversal-Schwingungen mit grossen Amplituden erzeugt. Dies ist insbesondere dann der Fall, wenn die Auspuffe Resonanzen im Bereich der vom Motor erzeugten Grundschwingungen haben. Die Schwingungen und sonstigen auf den Auspuff einwirkenden Beschleunigungen und Kräfte bewirken eine starke Beanspruchung der zum Auspuff gehörenden Rohre, Schalldämpfer-Gehäuse und deformierbaren Leitungselemente. Die Rohre und Gehäuse der bekannten Auspuffe haben dicke Wände. Die bekannten Abgasanlagen sind daher schwer. Das hohe Gewicht der bekannten Abgasanlagen erfordert für deren Herstellung viel Material, beispielsweise relativ teuren, rostfreien Stahl, und vergrössert vor allem den Treibstoffverbrauch beim Fahren. Ferner treten trotz der grossen Wanddikken ziemlich häufig Brüche der Auspuffe auf. Da die Schalldämpfer der bekannten Auspuffe normalerweise quer zur allgemeinen Längsrichtung der Auspuffe ausgehend von ihrer Mittelund/oder Ruhelage in verschiedenen transversalen Richtungen bis mindestens 1 cm und oft bis 2 cm oder noch mehr ausgelenkt werden, beanspruchen sie zusätzlich zu dem von ihnen eingenommenen Platz auch noch Platz für ihre Transversal-Bewegungen. Dies hat oft den Nachteil zur Folge, dass die Schalldämpfer nicht so gross bemessen werden können, wie es für eine gute Schalldämpfung wünschenswert wäre.

In der am 19.11.1997 veröffentlichten EP 0 807 749 A wurden Auspuffe vorgeschlagen, die zwei durch ein starres Rohr verbundene, deformierbare Leitungselemente und zwei oder drei stromabwärts von diesen angeordnete Katalysator- und/oder Schalldämpfer-Gehäuse aufweisen. Ferner wurden Haltemittel vorgesehen, um jedes dieser Gehäuse derart relativ fest am Fahrzeug zu halten, dass jedes dieser Gehäuse in allen Richtungen und insbesondere in der Längsrichtung des Fahrzeugs und damit in der allgemeinen Längsrichtung des Auspuffs höchstens geringfügig verschiebbar ist. Diese Haltemittel ermöglichen, Schwingungen und sonstige Bewegungen der Gehäuse und des ganzen Auspuffs beträchtlich zu reduzieren sowie diesen dünnwandig, leicht und trotzdem dauerhaft auszubilden. Die Abgasanlagen gemäss diesem Vorschlag haben jedoch noch den Nachteil, dass zwischen den genannten, aufeinanderfolgenden Gehäusen ebenfalls teure, deformierbare Leitungselemente angeordnet werden müssen, um die beim Betrieb durch die thermischen Ausdehnungen von starren Auspuffteilen verursachten Längenänderungen zu kompensieren.

Der Erfindung liegt die Aufgabe zugrunde, Nachteile der bekannten Abgasanlagen zu vermeiden und insbesondere eine Abgasanlage zu schaffen, die ermöglicht, Schwingungen und andere durch das Fahren verursachte Bewegungen des letzten Gehäuses möglichst klein zu halten, ohne dass zwischen stromabwärts vom ersten deformierbaren Leitungselement angeordneten Gehäusen ebenfalls noch deformierbare Leitungselemente angeordnet werden müssen.

Diese Aufgabe wird erfindungsgemäss durch eine Abgasanlage mit den Merkmalen des Anspruchs 1 gelöst.

Die Erfindung betrifft ferner ein Kraftfahrzeug, das erfindungsgemäss die Merkmale des Anspruchs 9 aufweist.

Vorteilhafte Ausgestaltungen des Erfindungsgegenstandes gehen aus den abhängigen Ansprüchen hervor.

Der Erfindungsgegenstand wird anschliessend anhand in der Zeichnung dargestellter Ausführungsbeispiele erläutert. In der Zeichnung zeigt
Fig. 1 ein schematisch, teils in Ansicht, teils im Schnitt gezeichnetes Kraftfahrzeug mit einer Abgasanlage,
Fig. 2 eine Draufsicht auf den sich stromabwärts vom Katalysator befindenden Teil des Auspuffs der Abgasanlage,
Fig. 3 einen Querschnitt durch den ersten Schalldämpfer der Abgasanlage in grösserem Massstab,
Fig. 4 einen Schnitt durch einen zum Halten des ersten Schalldämpfers dienenden Halter entlang der Linie IV - IV der Fig. 3 in noch grösserem Massstab,
Fig. 5 einen den zweiten Schalldämpfer enthaltenden Ausschnitt aus der Fig. 2 in grösserem Massstab,
Fig. 6 einen Querschnitt durch den zweiten Schalldämpfer,
Fig. 7 einen Schnitt durch einen der zum Halten des zweiten Schalldämpfers dienenden Halter entlang der Linie VII - VII der Fig. 5 in grösserem Massstab als diese,
Fig. 8 eine Schrägansicht von einem der zum Halten des zweiten Schalldämpfers dienenden Verbindungsorgane,
Fig. 9 eine zur Fig. 1 analoge Darstellung eines Kraftfahrzeugs mit einer anderen Abgasanlage,
Fig. 10 eine Draufsicht auf den sich stromabwärts vom Auspuffkrümmer befindenden Teil des Auspuffs der in Fig. 9 ersichtlichen Abgasanlage,
Fig. 11 einen zur breiteren Seite parallelen Schnitt durch eine Variante eines anderen Verbindungsorgans,
Fig. 12 eine Draufsicht auf das Verbindungsorgan gemäss Fig. 11,
Fig. 13 einen zur breiteren Seite parallelen Schnitt durch ein anderes Verbindungsorgan,
Fig. 14 eine Draufsicht auf das Verbindungsorgan gemäss Fig. 13,
Fig. 15 eine Ansicht der breiteren Seite noch eines anderen Verbindungsorgans,
Fig. 16 eine Ansicht der schmäleren Seite des Verbindungsorgans gemäss Fig. 15 und
Fig. 17 einen Axialschnitt durch eine Vorrichtung, die einen Katalysator-Schalldämpfer mit einem gemeinsamen Gehäuse bildet.

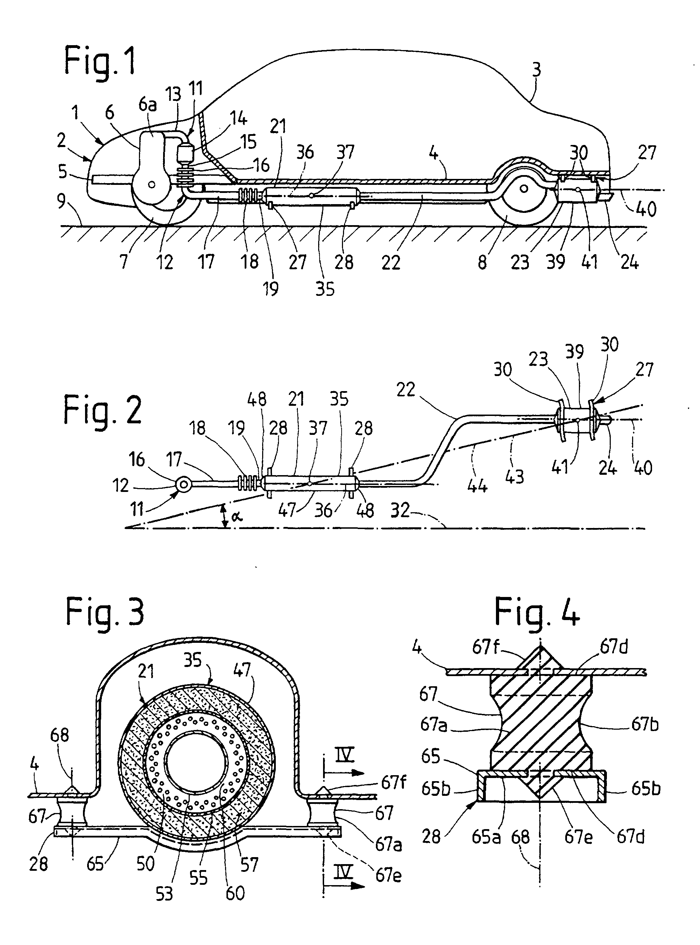

Das schematisch in der Fig. 1 gezeichnete Kraftfahrzeug 1 besteht aus einem Personenkraftwagen und besitzt einen Fahrzeugkörper 2. Dieser weist eine Karosserie 3, einen Fahrzeugboden 4 und ein Gestell 5 auf. Die Karosserie ist beispielsweise selbsttragend und bildet auch mindestens einen Teil des Bodens und/oder des Gestells. Der Fahrzeugkörper 2 hält einen Verbrennungsmotor 6, Vorderräder 7 und Hinterräder 8. Der Verbrennungsmotor 6 besitzt ein schwingungsdämpfend am Gestell 5 befestigtes Motorgehäuse 6a mit mehreren Abgasauslässen, von denen jeder einem Zylinder des Motors zugeordnet ist. Das Kraftfahrzeug 1 steht mit seinen Rädern auf einer horizontalen Fahr-Ebene 9 und besitzt eine Abgasanlage 11 mit einem Auspuff 12. Dieser ist zum grössten Teil auch in Fig. 2 im Grundriss ersichtlich und weist in der Strömungsrichtung des Abgases der Reihe nach eine Einlass- und Sammelvorrichtung 13, mindestens einen Katalysator 14, eine Verbindung 15, ein erstes elastisch deformierbares Leitungselement 16, ein gebogenes Rohr 17, ein zweites elastisch deformierbares Leitungselement 18, eine eventuell ein kurzes Rohr aufweisende Verbindung 19, einen ersten Schalldämpfer 21, ein relativ langes, gebogenes Rohr 22, einen zweiten Schalldämpfer 23 und einen durch ein Rohr 24 gebildeten, in die Umgebung mündenden Auslass auf. Der Verbrennungsmotor 6 befindet sich beim vorderen Ende des Kraftfahrzeugs 1. Der Auspuff 12 verläuft vom Verbrennungsmotor 6 zum Heck des Fahrzeugs und befindet sich zu einem grossen Teil unterhalb des Fahrzeugbodens 4. Zur Abgasanlage 11 gehören ferner Haltemittel 27. Diese weisen vier Halter 28, 30 auf, welche die beiden Schalldämpfer 21 bzw. 23 in der Nähe von deren Enden mit einem starren Teil des Fahrzeugkörpers 2, nämlich mit dem Fahrzeugboden 4 verbinden.

Die Einlass- und Sammelvorrichtung 13 besitzt einen Auspuffkrümmer, der für jeden Abgasauslass des Motors ein mit einem der Abgasauslässe des Motorgehäuses verbundenes Einlassrohr aufweist. Die Vorrichtung 13 besitzt ferner die Ausgänge der Einlassrohre miteinander verbindende Sammelverbindungsmittel und einen für alle Einlassrohre gemeinsamen Ausgang. Die Einlass- und Sammelvorrichtung 13 ist beispielsweise vollständig starr oder mindestens derart ausgebildet, dass der gemeinsame Ausgang starr mit dem Motorgehäuse 6a verbunden ist. Der Katalysator 14 hat ein starres Gehäuse mit einem Eingang, der starr mit dem gemeinsamen Ausgang der Einlass- und Sammelvorrichtung 13 verbunden ist. Die Rohre 17, 22, 24 und die allenfalls bei den Verbindungen 15, 19 vorhandenen Rohre sind starr. Die Einlass- und Sammelvorrichtung 13, das Gehäuse des Katalysators 14, die Rohre 17, 22, 24 und die Verbindungen 15, 19 bestehen aus metallischen Materialien, beispielsweise rostfreiem Stahl. Die aufeinanderfolgenden Teile 13 bis 24 des Auspuffs sind dicht miteinander verbunden.

Die zwei elastisch deformierbaren Leitungselemente 16, 18 sind in Fig. 1 nur schematisch dargestellt und weisen zum Beispiel einen metallischen, nämlich aus rostfreiem Stahl bestehenden, flexiblen, biegbaren, verlängerbaren und verkürzbaren Wellenbalg auf, dessen Enden dicht und fest mit den jeweils vorangehenden und nachfolgenden Auspuffteilen verbunden, beispielsweise mittelbar oder unmittelbar verschweisst sind. Die Leitungselemente 16, 18 können beispielsweise noch einen den Wellenbalg im Querschnitt in Abstand umschliessenden Mantel aufweisen, um den Wellenbalg gegen äussere Beschädigungen zu schützen und um die Deformationen des Wellenbalgs zu begrenzen.

In Fig. 2 ist noch eine zur Fahrzeug-Längsrichtung und Hauptfahrrichtung des Kraftfahrzeugs 1 parallele Gerade 32 gezeichnet. Die Wellenbälge der beiden elastisch deformierbaren Leitungselemente 16, 18 sind im undeformierten Ruhezustand ungefähr gerade und definieren miteinander einen Winkel bildende Achsen. Das erste deformierbare Leitungselement 16 verläuft beispielsweise vom Katalysator 14 weg ungefähr senkrecht oder geneigt nach unten. Das zweite deformierbare Leitungselement 18 ist beispielsweise ungefähr in der Fahrzeug-Längsrichtung angeordnet und hat also eine ungefähr zur Geraden 32 parallele Achse. Die beiden elastisch deformierbaren Leitungselemente 16, 18 dienen als Schwingungsdämpfer sowie Entkopplungselement und sollen die sich in bezug auf die Abgas-Strömungsrichtung stromabwärts vom Leitungselemente 16 befindenden Teile des Auspuffs 12 schwingungsmässig vom Motor entkoppeln sowie möglichst weitgehend verhindern, dass beim Betrieb vom Motor erzeugte Vibrationen bzw. Schwingungen des Motorgehäuses auf die sich stromabwärts von den Leitungselementen 16, 18 befindenden Auspuffteile übertragen werden. Die beiden Leitungselemente 16, 18 sollen die sich stromabwärts von ihnen befindenden Auspuffteile zudem auch in bezug auf sonstige, d.h. nicht durch Schwingungen verursachte Bewegungen, insbesondere Kippbewegungen, vom Motorgehäuse entkoppeln. Die beiden Leitungselemente 16, 18 können durch elastische Deformationen - insbesondere Biegungen sowie eventuell Verkürzungen und/oder Verlängerungen ihrer Wellenbälge durch Temperaturänderungen verursachte Längenänderungen der zwischen dem Motorgehäuse 6a und dem ersten Schalldämpfer 21 vorhandenen starren Auspuffteile, also insbesondere des Auspuffkrümmers der Einlass- und Sammelvorrichtung 13, des Gehäuses des Katalysators 14, des Rohrs 17 und der Verbindung 19 ausgleichen. Die beiden Leitungselemente 16, 18 können beispielsweise zusammen zur Fahrzeug-Längsrichtung parallele Längen- und sonstige Abmessungsänderungen ausgleichen, die bis mindestens 5 mm oder bis mindestens 10 mm oder sogar bis ungefähr oder mehr als 20 mm betragen.

Der erste Schalldämpfer 21 besitzt ein erstes, längliches Gehäuse 35. Dieses besitzt einen Einlass sowie einen Auslass, ist im wesentlichen rotationssymmetrisch zu einer ersten Gehäuse-Achse 36 und definiert mindestens ungefähr ein erstes Gehäuse-Zentrum 37. Der zweite Schalldämpfer 23 besitzt ein zweites, längliches Gehäuse 39. Dieses besitzt einen Einlass sowie einen Auslass und ist im wesentlichen rotationssymmetrisch zu einer zweiten Gehäuse-Achse 40, wobei jedoch der Einlass und der Auslass beispielsweise gegen die Achse 40 versetzt sind. Das zweite-Gehäuse 39 definiert mindestens ungefähr ein zweites Gehäuse-Zentrum 41. Die beiden Gehäuse-Achsen 36, 40 sind beispielsweise ungefähr parallel zur Fahr-Ebene 9 und zur Fahrzeug-Längsrichtung. Die beiden Gehäuse-Achsen sind jedoch beispielsweise im in Fig. 2 ersichtlichen Grundriss gegeneinander versetzt. Ferner können die beiden Gehäuse-Achsen eventuell auch ein wenig voneinander abweichende Höhen, d.h. Abstände von der Fahr-Ebene 9 haben. Die beiden Gehäuse 35, 39 definieren eine durch sie verlaufende Gehäuse-Verbindungsgerade 43. Diese verläuft beispielsweise mindestens annähernd durch die beiden Gehäuse-Zentren 37, 41, könnt jedoch stattdessen eventuell durch den Auslass des ersten Gehäuses und den Einlass des zweiten Gehäuses verlaufen. Die Gehäuse-Verbindungsgerade ist ungefähr parallel zur Fahr-Ebene 9 oder bildet mit dieser höchstens einen kleinen Winkel und bildet mit der Fahrzeug-Längsrichtung beispielsweise einen Winkel α. Die senkrecht auf der Fahr-Ebene 9 stehende und durch die Gehäuse-Verbindungsgerade 43 verlaufende, vertikale Ebene wird im folgenden als Gehäuse-Verbindungsebene 44 bezeichnet.

Das erste Gehäuse 35 des auch in Fig. 3 ersichtlichen ersten Schalldämpfers 21 besitzt eine dichte Wandung mit einem im wesentlichen zylindrischen Mantel 47 und zwei einander abgewandten, dicht und fest mit dem Mantel verbundenen Endwänden 48. Das Gehäuse 35 enthält zwei gasdurchlässige Zwischenwände 50, von denen sich jede in der Nähe von einer der Endwände 48 befindet und aus einer im wesentlichen ebenen, ringförmigen, mindestens stellenweise perforierten Scheibe besteht. Der Schalldämpfer 21 besitzt zwei zur Achse 36 koaxiale Rohre 53, von denen jedes eine der Endwände 48 und die sich näher bei dieser befindende Zwischenwand 50 durchdringt. Die beiden Rohre 53 sind starr und dicht mit der von ihnen durchdrungenen Endwand 48 verbunden. Die Zwischenwände 50 sind fest mit dem Mantel 47 und/oder mit dem sie durchdringenden Rohr 53 verbunden und haben beispielsweise durch Punktschweiss-Verbindungen am Mantel befestigte Flansche. Die äusseren Enden der Rohre 53 bilden den Einlass bzw. Auslass des Schalldämpfers 21. Jedes Rohr 53 hat in der Nähe seines inneren Endes einen gasdurchlässigen, perforierten Abschnitt. Die inneren Enden der beiden Rohre 53 sind offen oder geschlossen und in axialer Richtung durch einen Zwischenraum voneinander getrennt. Das Gehäuse 35 enthält zwischen den beiden Zwischenwänden 50 einen im allgemeinen zylindrischen Innenmantel 55. Dieser besteht aus zwei hülsenförmigen Innenmantelteilen, von denen jeder am einen Ende an einer der Zwischenwände 50 befestigt ist. Die anderen, den Zwischenwänden abgewandten Endabschnitte der beiden Innenmantelteile umschliessen einander mit höchstens kleinem Spiel und sind parallel zur Achse 36 gegeneinander verschiebbar. Der zweiteilige Innenmantel 55 ist im grössten Teil seiner Länge gasdurchlässig und perforiert. Das Gehäuse 35, die Zwischenwände 50, die beiden Rohre 53 und der Innenmantel 55 bestehen aus metallischen Materialien, beispielsweise rostfreiem Stahl. Zwischen dem Mantel 47 und dem Innenmantel 55 ist ein im Querschnitt ringförmiger Zwischenraum vorhanden, der mit einer Schicht von wärmeisolierendem und schallabsorbierendem Material 57 gefüllt ist. Zwischen jeder Endwand 48 und der dieser benachbarten Zwischenwand 50 ist ebenfalls ein Zwischenraum vorhanden, der das beide Wände durchdringende Rohr umschliesst sowie mit wärmeisolierendem und schallabsorbierenden Material 57 gefüllt ist. Das Material 57 besteht aus mineralischen Fasern, beispielsweise aus Basaltwolle und/oder sonstiger Steinwolle und/oder Glaswolle. Dagegen ist der im Querschnitt vom Innenmantel 55 umschlossene, zwischen den beiden Zwischenwänden 50 vorhandene Innenraum 60 - abgesehen von den Rohren 53 und allenfalls noch vorhandenen, zum Abstützen von diesen dienenden Stützen - hohl und leer.

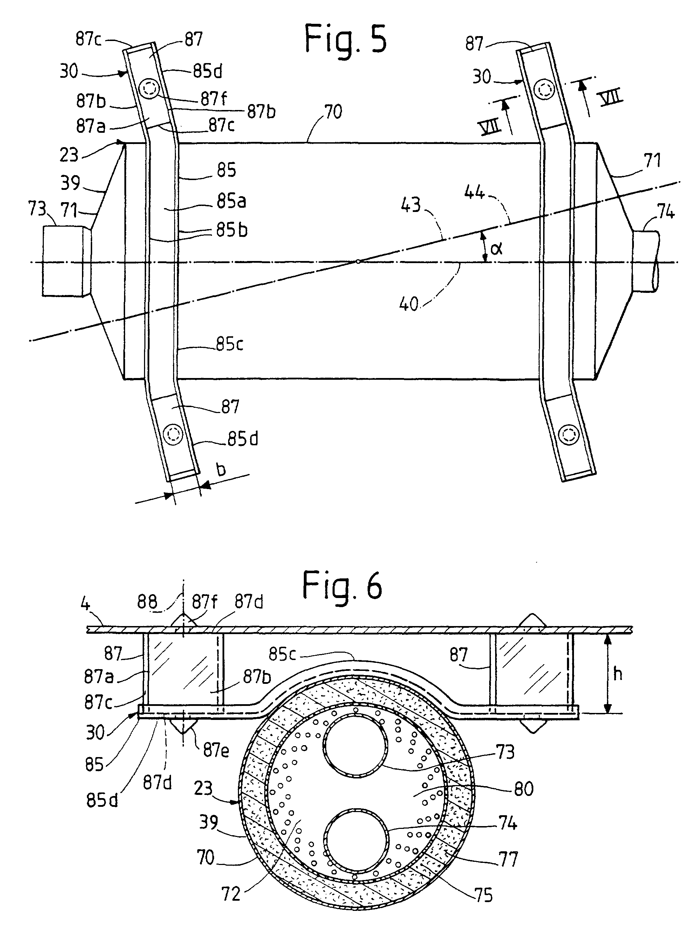

Die beiden zur Befestigung des ersten Schalldämpfers 21 dienenden Halter 28 sind beispielsweise gleich oder ähnlich ausgebildet, stehen entlang dem Schalldämpfer in Abstand von einander und sind in der Nähe der beiden Enden des Schalldämpfers 21, nämlich bei dessen Zwischenwänden 50 an dessen Mantel befestigt. Der Halter 28 ist zum Beispiel gemäss den Figuren 3 sowie 4 ausgebildet, in denen auch ein Ausschnitt des Fahrzeugbodens 4 ersichtlich ist. Dieser ist beispielsweise im allgemeinen mehr oder weniger eben, hat jedoch eine nach oben ragende Ausbuchtung. Diese begrenzt eine gegen unten offene Rinne, die häufig als Tunnel bezeichnet wird, die eventuell eine nicht gezeichnete Welle enthält und in welcher sich mindestens ein Teil des Auspuffs 12, insbesondere mindestens ein Querschnittbereich des ersten Schalldämpfers 21 befindet.

Jeder Halter 28 weist ein unmittelbar am Gehäuse 35 des ersten Schalldämpfers 21 angreifendes Halteorgan 65 und zwei das letztere mit dem Fahrzeugboden 4 verbindende Verbindungsorgane 67 auf. Das Halteorgan 65 besteht aus einem metallischen Material, beispielsweise rostfreiem Stahl. Das Halteorgan 65 ist starr, länglich sowie rechtwinklig zum Schalldämpfer 21 angeordnet und besteht im wesentlichen aus einem U-Profilstab mit einem Steg 65a und zwei Schenkeln 65b. Der U-Profilstab ist an den Enden durch Endelemente verstärkt, die mit den Schenkeln und dem Steg verbunden sind. Der mittlere Abschnitt des Halteorgans 65 ist parallel zur Querschnittsform des Mantels 47 des Schalldämpfer-Gehäuses 35 gebogen, liegt mit der äusseren, sich oben befindenden Fläche des Stegs 65a auf der unteren Seite des Schalldämpfer-Gehäuses 35 am Mantel 47 an und ist beispielsweise durch einige Punkt-Schweissverbindungen oder sonstige Schweiss-Verbindungen am Mantel 47 befestigt. Jedes Verbindungsorgan 67 ist mindestens teilweise elastisch deformierbar und besteht zum Beispiel aus einem einstückigen, gummielastischen Körper aus synthetischem und/oder natürlichen Gummi. Jedes Verbindungsorgan 67 ist im wesentlichen rotationssymmetrisch zu einer zur Ebene 9 ungefähr rechtwinkligen und also ungefähr vertikalen Achse 68 und hat einen Hauptabschnitt 67a. Dieser besteht aus einem kompakten Block, hat über seine ganze axiale Abmessung einen vollen Querschnitt und enthält also keine freien Hohl- oder Zwischenräume oder Löcher. Der Hauptabschnitt 67a hat eine im allgemeinen zylindrische, aber im mittleren Bereich im Axialschnitt leicht eingebuchtete Umfangsfläche 67b, an seinen beiden Enden ebene, ringförmige Auflage- und/oder Endflächen 67d und hängt im mittleren Bereich von jedem Ende mit einem in axialer Richtung von diesem wegragenden, ungefähr pilzförmigen Fortsatz zusammen, der Befestigungs- und/oder Verbindungsmittel 67e bzw. 67f bildet. Die beiden zum gleichen Halter 28 gehörenden Verbindungsorgane 67 sind entlang dem Halteorgan 65 des betreffenden Halters gegeneinander versetzt und in der Nähe der Enden des Halteorgans angeordnet. Jedes Verbindungsorgan liegt mit den ebenen Auflage- und/oder Endflächen seines Hauptabschnitts 67a an der oberen Fläche des Stegs 65a des Halteorgans bzw. an einem Abschnitt der unteren Fläche des Fahrzeugbodens 4 an.

Die zwischen den beiden Auflage- und/oder Endflächen gemessene, axiale Abmessung bzw. Höhe des Hauptabschnitts 67a des Verbindungsorgans 67 beträgt beispielsweise etwa 50% bis 150% des maximalen Durchmessers des Hauptabschnitts. Der maximale Durchmesser beträgt bei einer Abgasanlage für einen Personenkraftwagen ferner vorzugsweise etwa 15 mm bis 50 mm. Die genannte axiale Abmessung kann dann etwa 10 mm bis 50 mm betragen.

Das zweite Gehäuse 39 des besonders deutlich in den Figuren 5 und 6 ersichtlichen, zweiten Schalldämpfers 23 hat einen zylindrischen Mantel 70 und zwei Endwände 71. Das Gehäuse 39 enthält zwei scheibenförmige, mindestens stellenweise gasdurchlässige, perforierte Zwischenwände 72. Der Schalldämpfer 23 hat zwei Rohre 73 und 74, von denen jedes eine der Endwände 71 und die diesen benachbarte Zwischenwand 72 durchdringt. Das Gehäuse 39 des zweiten Schalldämpfers 23 ist kürzer als das Gehäuse 35 des ersten Schalldämpfers 21, hat aber einen grösseren Durchmesser als das Gehäuse 35. Die Rohre 73, 74 sind parallel zur Achse 40, aber gegen diese versetzt und beispielsweise oberhalb bzw. unterhalb von dieser angeordnet. Ferner haben die beiden Rohre 73, 74 sich nebeneinander im gleichen Längsbereich des zweiten Gehäuses 39 befindende Abschnitte. Das äussere Ende des Rohrs 73 bildet den Einlass des zweiten Schalldämpfers 23 und ist mit dem Rohr 22 verbunden. Das Rohr 73 ist zum Beispiel an seinem sich im Gehäuse 35 befindenden Ende zusammengequetscht sowie mehr oder weniger dicht abgeschlossen und hat in der Nähe dieses Endes einen gasdurchlässigen, perforierten Abschnitt, könnte aber beim inneren Ende auch offen sein. Das Rohr 74 ist an seinem inneren Ende beispielsweise offen. Das äussere Ende des Rohrs 74 bildet den Auslass des zweiten Schalldämpfers 23 und ist mit dem Rohr 24 verbunden und/oder bildet dieses. Der zweite Schalldämpfer 23 hat einen Innenmantel 75, der wie beim ersten Schalldämpfer aus zwei ineinander hineinragenden, gegeneinander verschiebbaren Innenmantelteilen besteht und zum grössten Teil gasdurchlässig und perforiert ist. Die beiden zwischen den Endwänden 71 und einer der gasdurchlässigen Zwischenwände 72 vorhandenen Zwischenräume sowie der zwischen dem Mantel 70 und dem Innenmantel 75 vorhandene Zwischenraum enthalten ein wärmeisolierendes sowie schallabsorbierendes Material 77. Dieses besteht wie beim ersten Schalldämpfer aus mineralischen Fasern. Der zwischen den beiden Zwischenwänden 72 vorhandene, im Querschnitt vom Innenmantel 75 umschlossene Innenraum 80 ist abgesehen von den Rohren 73, 74 hohl und frei. Soweit vorgängig nichts anderes geschrieben wurde, ist der zweite Schalldämpfer 23 ähnlich ausgebildet wie der erste Schalldämpfer 21.

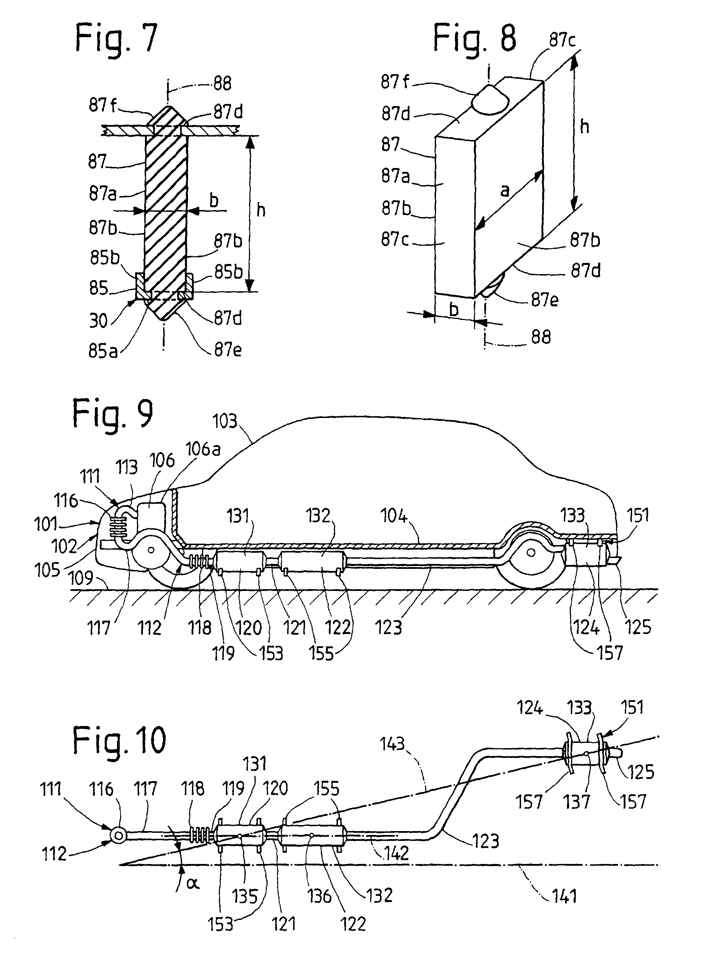

Der zweite Schalldämpfer 23 ist beispielsweise in der Nähe des hinteren Endes des Kraftfahrzeugs 1 hinter dessen Hinterachse unter einem mehr oder weniger ebenen Abschnitt des Fahrzeugbodens 4 angeordnet. Die beiden zum Halten des zweiten Schalldämpfer-Gehäuses 39 dienenden Halter 30 sind beispielsweise gleich ausgebildet und auch in Fig. 5 ersichtlich. Ferner ist einer dieser Halter 30 in den Figuren 6 und 7 dargestellt. Jeder Halter 30 besitzt ein starres, längliches, metallisches beispielsweise aus rostfreiem Stahl bestehendes Halteorgan 85. Jedes Halteorgan 85 ist ähnlich wie die Halteorgane 65 aus einem U-Profilstab gebildet und hat einen Steg 85a sowie zwei Schenkel 85b. Der U-Profilstab ist an den Enden durch Endelemente verstärkt, die mit den Schenkeln und dem Steg verbunden sind. Jedes Halteorgan 85 hat einen mittleren Abschnitt 85c und zwei Endabschnitte 85d. Der mittlere Abschnitt 85c ist in der in Fig. 5 gezeichneten Draufsicht, d.h. in einer zur Ebene 9 rechtwinkligen Projektion, gerade und rechtwinklig zur zweiten Gehäuse-Achse 40. Der mittlere Abschnitt 85c ist in der in Fig. 6 gezeichneten, zur Achse 40 parallelen Blickrichtung mindestens zum Teil derart gebogen, dass er mit der unteren Fläche des Stegs 85a auf der oberen Seite des zweiten Gehäuses 39 an dessen Mantel 70 anliegt. Der mittlere Abschnitt 85c des Halteorgans 85 jedes Halters 30 ist durch einige Punkt-Schweissverbindungen am Mantel 70 befestigt. Die Endabschnitte 85d sind mindestens im wesentlichen gerade und derart gegen den Mittelabschnitt 85c abgewinkelt oder abgebogen, dass sie mindestens annähernd rechtwinklig zur Gehäuse-Verbindungsebene 44 verlaufen. Die Endabschnitte 85d sind dementsprechend mindestens annähernd parallel zur horizontalen Ebene 9 und ferner gemäss Fig. 6 parallel zu den ihnen gegenüberstehenden Abschnitten des Fahrzeugbodens 4.

Jeder Halter 30 weist zwei mindestens teilweise elastisch deformierbare, nämlich gummielastische Verbindungsorgane 87 auf, von denen jedes an einem der Endabschnitte 85d des Halteorgans 85 angeordnet und eines separat in Fig. 8 gezeichnet ist. Jedes Verbindungsorgan 87 besteht aus einem einstückigen Körper aus synthetischem und/oder natürlichem Gummi und definiert eine mindestens annähernd zur Fahr-Ebene 9 senkrechte Achse 88. Jedes Verbindungsorgan 87 hat einen Hauptabschnitt 87a. Dieser besteht aus einem quaderförmigen, kompakten Block, hat über seine ganze axiale Abmessung einen vollen Querschnitt und enthält also keine freien Hohl- oder Zwischenräume oder Löcher. Der Hauptabschnitt 87a ist in einem zur Achse 88 rechtwinkligen Querschnitt rechteckförmig und hat zwei breite Seitenflächen 87b, zwei schmale Seitenflächen 87c und zwei Auflage- und/oder Endflächen 87d. Die Seitenflächen 87b, 87c sind eben und parallel zur Achse 88. Die Auflage- und/oder Endflächen 87d sind eben und rechtwinklig zur Achse 88. Der Hauptabschnitt 87a hängt im mittleren Bereich von jedem Ende mit einem in axialer Richtung von diesem wegragenden, ungefähr pilzförmigen Fortsatz zusammen, der Befestigungs- und/oder Verbindungsmittel 87e bzw. 87f bildet. Der Hauptabschnitt 87a hat in einem zur Achse 88 rechtwinkligen Querschnitt eine parallel zur den breiten Seitenflächen 87b gemessene Querschnittsabmessung - d.h. Breite - a und eine rechtwinklig zu dieser sowie parallel zu den schmalen Seitenflächen 87c gemessene Querschnittsabmessung - d.h. Dicke - b. Der Hauptabschnitt 87a hat ferner eine parallel zur Achse 88 gemessene axiale Abmessung bzw. Höhe h. Die Breite a und die Höhe h betragen mindestens das 2-fache und beispielsweise mindesten ungefähr das 3-fache bis ungefähr das 5-fache der Dicke b. Die Dicke b beträgt beispielsweise ungefähr 7 mm bis 15 mm. Die Breite a und die Höhe h können dann beispielsweise etwa 20 mm bis 75 mm betragen. Das sich in den Figuren 1 und 6 unten befindende Ende des Hauptabschnitts 87a jedes Verbindungsorgans 87 ragt von oben her in die Nut von einem Endabschnitt 85d eines Halteorgans 85 hinein, ist durch die Schenkel 85b mit höchstens kleinem Spiel geführt und liegt mit seiner ebenen Auflage- und/oder Endfläche 87d auf dem Steg 85a auf. Die breiten Seitenflächen 87b jedes Verbindungsorgans 87 sind dabei parallel zur Längsrichtung des betreffenden Endabschnitt 85d des Halteorgans 85.

Die pilzförmigen Befestigungs- und/oder Verbindungsmittel 67e, 67f, 87e, 87f werden bei der Montage des Auspuffs unter einer vorübergehenden elastischen Deformation durch Löcher in den Stegen 65a bzw. 85a und im Fahrzeugboden 4 hindurch gesteckt und schnappen dabei ein, so dass die Köpfe der Befestigungs- und/oder Verbindungsmittel die Stege 65a, 85a und den Fahrzeugboden 4 hintergreifen. Die Verbindungsorgane 67, 87 verbinden die Halteorgane 65 bzw. 85 und die beiden an diesen angeschweissten Schalldämpfer 21 bzw. 23 dann lösbar mit dem Fahrzeugboden 4.

Jeder Schalldämpfer 21 und 23 wird also im montierten Zustand durch vier Verbindungsorgane 67 bzw. 87 am Fahrzeugboden 4 des Fahrzeugkörpers 2 gehalten. Die vier Verbindungsorgane 67 bzw. 87 bilden zusammen eine 4-Punkt-Aufhängung. Die Mittelpunkte der vier denselben Schalldämpfer haltenden Verbindungsorgane 67 bzw. 87 definieren in einer vertikalen Projektion auf die Fahr-Ebene 9 ein Viereck, beispielsweise ein Rechteck. Dabei sind auf jeder Seite einer zur Fahr-Ebene 9 senkrechten, durch die Gehäuse-Achse 36 bzw. 46 verlaufenden Ebene zwei Verbindungsorgane vorhanden.

Wenn der zweite Schalldämpfer 23 am Fahrzeugkörper montiert ist, sind die breiten Seitenflächen 87b der Verbindungsorgane 87 mindestens annähernd rechtwinklig zur Gehäuse-Verbindungsebene 44. Da die Gehäuse-Verbindungsgerade 43 ungefähr parallel zur Fahr-Ebene 9 und also ungefähr horizontal ist, sind die breiten Seitenflächen 87b auch ungefähr rechtwinklig zur Gehäuse-Verbindungsgeraden 43. Der Hauptabschnitt 87a jedes Verbindungsorgans 87 hat also rechtwinklig zur Gehäuse-Verbindungsgeraden 43 eine Querschnittsabmessung bzw. Breite a, die wesentlich grösser ist als die rechtwinklig dazu und parallel zur Gehäuse-Verbindungsebene 44 gemessene Querschnittsabmessung bzw. Dicke b.

Der Katalysator 14 ist durch die Einlass- und Sammelvorrichtung 13 starr mit dem Motorgehäuse 6a verbunden. Die gummielastischen Verbindungsorgane 67, 87 der Halter 28, 30 ermöglichen infolge ihrer elastischen Deformierbarkeit Auslenkungen der Schalldämpfer-Gehäuse 35 bzw. 39 aus den Ruhelagen dieser Gehäuse. Die Verbindungsorgane erzeugen jedoch schon bei sehr kleinen, beliebig gerichteten Auslenkungen diesen entgegenwirkende Rückstellkräfte, die mit wachsender Auslenkung innerhalb eines gewissen Bereichs stetig, monoton und beispielsweise mehr oder weniger linear zur Auslenkung wachsen. Die Verbindungsorgane ergeben zudem schwingungsdämpfende Verbindungen der Schalldämpfer-Gehäuse mit dem Fahrzeugkörper.

Die das erste Gehäuse 35 mit dem Fahrzeugboden 4 verbindenden Verbindungsorgane 67 ermöglichen also gewisse, aber in allen Richtungen nur relativ kleine Bewegungen des ersten Gehäuses 35. Die Verbindungsorgane 67 der Halter 28 sind vorzugsweise derart ausgebildet, dass das erste Gehäuse 35 bei zusammengebautem Auspuff und vorzugsweise auch in vom restlichen Auspuff getrenntem Zustand durch eine auf das Gehäuse einwirkende, konstante, stationäre Beschleunigung von 10 m/s² und beispielsweise auch noch 20 m/s² oder sogar 50 m/s² oder eine konstante, stationäre Kraft von 100 N mit beliebiger Richtung bezüglich des Fahrzeugkörpers höchstens 5 mm und vorzugsweise höchstens 2 mm aus der Mittel- und/oder Ruhelage ausgelenkt wird.

Wenn das zweite Gehäuse 39 am Fahrzeugkörper 2 gehalten, aber vom restlichen Auspuff getrennt ist, werden die gummielastischen Verbindungsorgane 87 durch eine am zweiten Gehäuse angreifende Kraft, die parallel zur Gehäuse-Verbindungsgeraden 43 und damit auch ungefähr parallel zur Schnittgeraden der Fahr-Ebene 9 mit der Gehäuse-Verbindungsebene 44 ist, wesentlich stärker gebogen als durch eine gleich grosse am zweiten Gehäuse angreifende Kraft, die rechtwinklig zur Gehäuse-Verbindungsebene 44 ist. Wenn eine zur Fahr-Ebene 9 rechtwinklige und also ungefähr zu den Achsen 88 parallele Kraft am zweiten Gehäuse 39 angreift, komprimiert oder dehnt diese Kraft die Verbindungsorgane 87 und verursacht eine zu den Achsen 88 parallele Auslenkung bzw. Verschiebung des zweiten Gehäuses. Wenn das zweite Gehäuse vom restlichen Auspuff getrennt ist, verursacht eine zu den Achsen 88 parallele Kraft jedoch eine wesentlich kleinere Verschiebung des zweiten Gehäuses als eine gleich grosse, zur Gehäuse-Verbindungsgeraden 43 parallele Kraft. Das zweite Gehäuse 39 wird also in vom restlichen Auspuff getrenntem Zustand durch eine an ihn angreifende, zur Gehäuse-Verbindungsgeraden 43 parallele Kraft wesentlich mehr aus seiner Ruhelage ausgelenkt als durch eine gleich grosse Kraft, die zur Gehäuse-Verbindungsgeraden 43 und/oder zur Schnittgeraden der Gehäuse-Verbindungsebene 44 mit der Fahr-Ebene 9 rechtwinklig ist und eine sonst beliebige Richtung hat. Die gummielastischen Verbindungsorgane 87 sind vorzugsweise derart ausgebildet, dass das zweite Gehäuse 39 bei zusammengebautem Auspuff und vorzugsweise auch in vom restlichen Auspuff getrenntem Zustand durch eine auf das Gehäuse einwirkende, eine zur Gehäuse-Verbindungsgeraden rechtwinklige und sonst beliebige Richtung aufweisende, konstante, stationäre Beschleunigung von 10 m/s² und beispielsweise auch noch 20 m/s² oder sogar 50 m/s² oder eine konstante, stationäre Kraft von 100 N bezüglich des Fahrzeugkörpers höchstens 5 mm und vorzugsweise höchstens 2 mm aus der Mittel- und/oder Ruhelage ausgelenkt wird. Das zweite Gehäuse 39 wird vorzugsweise mindestens in mit dem restlichen Auspuff verbundenem Zustand und eventuell auch in vom restlichen Auspuff getrenntem Zustand durch eine zur Gehäuse-Verbindungsgeraden 43 parallele Beschleunigung oder Kraft mit den vorgängig angegebenen Grössen bezüglich des Fahrzeugkörpers höchstens 5 mm und zur Beispiel sogar nur höchstens 2 mm aus der Mittel- und/oder Ruhelage ausgelenkt. Die Verbindungsorgane 87 sind jedoch derart ausgebildet, dass das zweite Gehäuse 39 durch die relativ grossen, durch thermische Dehnungen des Rohrs 22 erzeugten Kräfte unter einer elastischen Deformation - insbesondere einer Biegung - ungefähr entlang der Gehäuse-Verbindungsgeraden 43 und/oder ungefähr parallel zur Schnittgeraden der Gehäuse-Verbindungsebene 44 mit der Fahr-Ebene 9 mindestens ungefähr 5 mm und beispielsweise sogar mindestens ungefähr 10 mm verschoben werden kann.

Wie schon in der Einleitung erwähnt, wird der Auspuff durch das ihn vom Verbrennungsmotor zugeführte Abgas erhitzt. Die thermisch verursachten Längenänderungen der stromaufwärts vom ersten Schalldämpfer 21 angeordneten, starren Auspuffteile werden mindestens zum grössten Teil durch die beiden elastisch deformierbaren Leitungselemente 16 und 18 ausgeglichen. Die im Ruhezustand ungefähr gerade Achsen aufweisenden Wellenbälge der Leitungselemente 16, 18 werden beim Betrieb des Motors dann gebogen und eventuell auch ein wenig zusammengedrückt.

Der den Auslass des ersten Gehäuses 35 mit dem Einlass des zweiten Gehäuses 39 verbindende Auspuffteil ist mindestens im wesentlichen durch das gebogene Rohr 22 gebildet, enthält weder Wellenbälge noch sonstige deformierbare Leitungselemente und ist also im wesentlichen überall starr. Das Rohr 22 bildet einen verhältnismässig langen Teil des Auspuffs. Der entlang einer Geraden gemessene Abstand des Einlasses des zweiten Schalldämpfers vom Auslass des ersten Schalldämpfers beträgt normalerweise mindestens ungefähr 80 cm und meistens mindestens ungefähr 1 m bis etwa 2 m. Das Abgas wird entlang seinem Strömungsweg im Auspuff abgekühlt und erhitzt das Rohr 22 auf eine beispielsweise noch 200°C bis 400°C betragende Temperatur. Das Rohr 22 wird infolge dieser Erhitzung beispielsweise um ungefähr 0,25% bis ungefähr 0,5% verlängert, so dass der genannte Abstand des Einlasses des zweiten Schalldämpfers vom Auslass des ersten Schalldämpfers beim Betrieb des Motors beispielsweise um etwa 2 mm bis 10 mm vergrössert wird. Diese Längenänderung des Rohrs 22 und die dadurch von letzteren erzeugte, die beiden Schalldämpfer-Gehäuse voneinander wegdrückende, relativ grosse Kraft bewirkt eine Biegung der gummielastischen Verbindungsorgane, insbesondere der beim zweiten Gehäuse 39 vorhandenen Verbindungsorgane 87. Die Verlängerung des Rohrs 22 wird daher mindestens zum grössten Teil durch eine elastische Biegung der Verbindungsorgane 87 und eine Verschiebung bzw. Auslenkung des zweiten Gehäuses ausgeglichen.

Die in den Schalldämpfern vorhandenen Rohre werden vom Abgas ebenfalls erhitzt und auch verlängert. Da diese Rohre nur an einem Ende am Gehäuse des betreffenden Schalldämpfers befestigt und am anderen Ende frei sind, können sie sich ungehindert verlängern, ohne Spannungen zu erzeugen. Das Abgas erhitzt auch die Innenmäntel 55 und 75 der Schalldämpfer. Da jeder Innenmantel aus zwei Teilen besteht, deren eines Ende befestigt und deren anderes Ende verschiebbar ist, erzeugen die Längenänderungen der Innenmantelteile ebenfalls keine Spannungen. Die in den Gehäusen der Schalldämpfer vorhandenen, aus Fasern bestehenden Materialien 57, 77 isolieren die Mäntel 47, 70 thermisch gegen das Abgas, so dass diese Mäntel durch das Abgas höchstens relativ geringfügig auf Temperaturen von beispielsweise ungefähr 100°C bis 300°C erhitzt werden. Dementsprechend verursacht das heisse Abgas auch höchstens kleine Verlängerungen der Mäntel 47, 70. Diese Verlängerungen können durch elastische Deformationen, insbesondere Biegungen, der gummielastischen Verbindungsorgane 67, 87 ausgeglichen werden. Im übrigen vermeiden die wärmeisolierenden Materialien 57, 77, dass die aus Gummi bestehenden Verbindungsorgane 67, 87 durch eine übermässige Erhitzung beschädigt werden.

Wie schon in der Einleitung beschrieben, können bei der Verwendung des Kraftfahrzeugs durch die Vibrationen des Motorgehäuses und das pulsierende Abgas Schwingungen der verschiedenen Auspuffteile angeregt werden. Ferner können durch schnelle Änderungen der vom Motor abgegebenen Leistung verursachte Bewegungen des Motorgehäuses von diesem auf Auspuffteile übertragen werden. Zudem können durch das Fahren auf die Auspuffteile einwirkende Beschleunigungen verursacht werden. Die Schalldämpfer haben von den stromabwärts des ersten elastisch deformierbaren Leitungselements 16 angeordneten Auspuffteilen die grösste Masse pro Längeneinheit. Die Verbindungsorgane 67, 87 verbinden die beiden Schalldämpfer zwar etwas beweglich und federnd mit dem Fahrzeugboden. Wie beschrieben, ermöglichen die Verbindungsorgane 67 jedoch in allen Richtungen nur geringe Auslenkungen des ersten Schalldämpfers. Die Verbindungsorgane 87 halten Auslenkungen des zweiten Schalldämpfers insbesondere in allen zur Gehäuse-Verbindungsgeraden 43 rechtwinkligen Richtungen sehr klein und hemmen auch zur Verbindungsgeraden 43 parallele Verschiebungen. Ferner ist der Winkel α normalerweise relativ klein, beispielsweise höchstens 30°. Die Gehäuse-Verbindungsgerade ist in der Praxis häufig sogar ungefähr parallel zur Fahrzeug-Längsrichtung, so dass Winkel α ungefähr gleich Null wird.

Bei relativ frei beweglichen Auspuffen, wie sie vom Stand der Technik bekannt sind, neigen die verschiedenen Auspuffteile und insbesondere die relativ schweren Schalldämpfer vor allem zu Schwingungen, die ungefähr transversal zur allgemeinen Längsrichtung des Auspuffs sind. Das Fahren über Unebenheiten verursacht auf die Schalldämpfer und sonstigen Auspuffteile einwirkende Beschleunigungen, die vorherrschend vertikal gerichtet sind. Das Fahren von Kurven verursacht vor allem ungefähr horizontale und zur Fahrzeug-Längsrichtung ungefähr rechtwinklige Beschleunigungen. Obschon die Verbindungsorgane 67, 87 deformierbar sind, verhindern sie starke Schwingungsresonanzen und Schwingungen mit grossen Amplituden. Desgleichen verhindern sie, dass die durch das normale Fahren verursachten Beschleunigungen grosse Bewegungen der Schalldämpfer und der sonstigen starren, stromabwärts vom ersten deformierbaren Leitungselement 16 angeordneten Auspuffteile verursachen. Die Rohre 22, 24 und insbesondere die beiden Schalldämpfer 21, 23 werden durch die beim normalen Betrieb vom Verbrennungsmotor erzeugten Vibrationen und die allenfalls vom pulsierenden Abgas angeregten Schwingungen in allen Richtungen höchstens 5 mm, vorzugsweise höchstens 2 mm und normalerweise höchstens 1 mm oder sogar nur höchstens 0,5 mm aus ihren Mittellagen ausgelenkt, die sie nach Erreichen der Betriebstemperaturen infolge der thermischen Abmessungsänderungen einnehmen. Die beim normalen Fahrbetrieb des Kraftfahrzeugs durch Änderungen der momentanen Motorleistung vom Motorgehäuse auf den Auspuff übertragenen Bewegungen und die durch Bodenunebenheiten, Kurven, Beschleunigungs- und Bremsvorgänge verursachten und auf den Auspuff einwirkenden Beschleunigungen können auch Auslenkungen aus den genannten Mittellagen verursachen. Diese Auslenkungen betragen in allen Richtungen ebenfalls höchsten 2 mm und normalerweise höchstens 0,5 mm.

Die stromabwärts des Katalysators 14 und insbesondere des ersten elastisch deformierbaren Leitungselements 16 angeordneten Rohre brauchen keine grossen durch die Vibrationen und/oder die Motorleistungsänderungen und/oder das Fahren verursachten Beschleunigungen und Kräfte aufzunehmen. Die Rohre 17, 22 und 24 brauchen daher im wesentlichen nur ihr eigenes Gewicht und eventuell noch teilweise das Gewicht der elastisch deformierbaren Leitungselemente 16, 18 zu tragen. Es ist daher nicht nötig die Rohre 22, 24 durch unmittelbar an ihnen selbst angreifende Halter am Fahrzeugkörper zu halten. Die Rohre 17, 22, 24 und die in den Schalldämpfern vorhandenen Rohre 53, 73, 74 können zudem relativ dünnwandig gemacht werden und haben Wanddicken, die mindestens im wesentlichen höchstens 1 mm, besser höchstens 0,8 mm und zum Beispiel ungefähr 0,5 mm betragen. Die Wände der Rohre des Auspuffkrümmers der Einlass- und Sammelvorrichtung 13 können eventuell ebenfalls etwas dünner als bei konventionellen, nicht erfindungsgemässen Abgasanlagen bemessen werden und eventuell ähnliche Dicken haben wie die nach dem Katalysator 14 angeordneten Rohre. Die Mäntel 47, 70, Endwände 48, 71, Zwischenwände 50, 80 sowie Innenmäntel 55, 75 der beiden Schalldämpfer brauchen ebenfalls nur geringe Wanddicken aufzuweisen. Diese Wanddicken betragen mindestens bei den grössten Teilen dieser Mäntel und Wände höchstens 1 mm, besser höchstens 0,8 mm und zum Beispiel ungefähr 0,5 mm.

Das in Fig. 9 ersichtliche Kraftfahrzeug 101, besteht wieder aus einem Personenkraftwagen, besitzt einen Fahrzeugkörper 102 mit einer Karosserie 103, einem Fahrzeugboden 104 sowie einem Gestell 105 sowie einen Verbrennungsmotor 106 mit einem Motorgehäuse 106a und steht auf einer Fahr-Ebene 109.

Das Fahrzeug hat ferner eine separat in Fig. 10 dargestellte Abgasanlage 111 mit einem Auspuff 112. Dieser weist - beginnend beim Motor - entlang dem Abgas-Strömungsweg der Reihe nach eine Einlass- und Sammelvorrichtung 113 mit einem Auspuffkrümmer und einem gemeinsamen Ausgang, ein erstes elastisch deformierbares Leitungselement 116, ein starres Rohr 117 ein zweites elastisch deformierbares Leitungselement 118, eine Verbindung 119, einen Katalysator 120, eine Verbindung 121, einen Schalldämpfer 122, ein Rohr 123, einen zweiten Schalldämpfer 124 und ein den Auslass des Auspuffs bildendes Rohr 125 auf. Der Auspuff 112 besitzt drei stromabwärts von den deformierbaren Leitungselementen 116, 118 sowie unterhalb des Fahrzeugbodens 104 angeordnete Gehäuse, nämlich ein zum Katalysator 120 gehörendes, erstes Gehäuse 131, ein zum Schalldämpfer 122 gehörendes, zweites Gehäuse 132 und ein zum Schalldämpfer 124 gehörendes, drittes Gehäuse 133. Das Gehäuse 131 des Katalysators 120 kann ähnliche Wanddicken haben, wie sie vorgängig für die Schalldämpfer-Gehäuse angegeben wurden und eventuell wie diese wärmeisolierende Faser-Materialien enthalten. Jedes Gehäuse 131, 132, 133 definiert mindestens ungefähr ein erstes Gehäuse-Zentrum 135 bzw. ein zweites Gehäuse-Zentrum 136 bzw. ein drittes Gehäuse-Zentrum 137. In Fig. 10 sind noch eine zur Fahrzeug-Längsrichtung parallele Gerade 141, eine Gehäuse-Verbindungsgerade 142 und eine Gehäuse-Verbindungsgerade 143 ersichtlich. Die Gehäuse-Verbindungsgerade 142 verläuft durch das erste Gehäuse 131 und das zweite Gehäuse 132, nämlich ungefähr durch die Gehäuse-Zentren 135, 136. Die Gehäuse-Verbindungsgerade 143 verläuft durch das erste Gehäuse 131 und das dritte Gehäuse 133, zum Beispiel ungefähr durch das erste Gehäuse-Zentrum 135 und das dritte Gehäuse-Zentrum 137. Die das erste Gehäuse mit dem zweiten Gehäuse verbindende Verbindung 121 ist beispielsweise sehr kurz und gerade, so dass sich der Einlass des zweiten Gehäuses 132 in nur kleinem Abstand vom Auslass des ersten Gehäuses 131 befindet. Dagegen ist das die beiden Schalldämpfer, d.h. das zweite und dritte Gehäuse miteinander verbindende Rohr 123 relativ lang. Die Achsen der drei Gehäuse sind beispielsweise ungefähr zur Fahrzeug-Längsrichtung parallel. Die Achse des zweiten Gehäuses fällt beispielsweise ungefähr mit derjenigen des ersten Gehäuses zusammen, während die Achse des dritten Gehäuses beispielsweise gegen diejenige des ersten Gehäuses versetzt ist, so dass die Gehäuse-Verbindungsgerade 143 wieder einen Winkel α mit der Fahrzeug-Längsrichtung bildet.

Die Abgasanlage 111 besitzt noch Haltemittel 151, welche die drei Gehäuse 131, 132, 133 am Fahrzeugboden 104 halten. Die Haltemittel weisen zwei Halter 153 zum Halten des ersten Katalysator-Gehäuses 131 und zwei Halter 155 zum Halten des zweiten Gehäuses 132 und zwei Halter 157 zum Halten des dritten Gehäuses 133 auf. Die zum Halten des ersten Gehäuses 131 dienenden Halter 153 sind gleich oder ähnlich ausgebildet wie die Halter 28 und besitzen wie diese zu einer Achse rotationssymmetrische Verbindungsorgane. Da sich das zweite Gehäuse 132 nahe beim ersten Gehäuse 131 befindet, müssen die gummielastischen Verbindungsorgane der zum Halten des zweiten Gehäuses dienenden Halter 155 nur relativ kleine, durch thermische Ausdehnung verursachte Längenänderungen ausgleichen. Die Halter 155 können daher ebenfalls ähnlich wie die Halter 28 ausgebildet sein und wie diese zu einer Achse rotationssymmetrische Verbindungsorgane haben. Die am zweiten Gehäuse 132 befestigten Halter 155 können jedoch stattdessen Verbindungsorgane aufweisen, die ähnlich wie die Verbindungsorgane 87 quaderförmige Hauptabschnitte haben. Die breiteren Seitenflächen der letzteren können dann ungefähr senkrecht zu einer Gehäuse-Verbindungsebene sein, die senkrecht zur Fahr-Ebene 109 ist und durch die Gehäuse-Verbindungsgerade 142 verläuft. Die Halter 157 des dritten Gehäuses 133 sind gleich oder ähnlich ausgebildet wie die Halter 30 und haben wie diese gummielastische Verbindungsorgane mit quaderförmigen Hauptabschnitten. Die breiteren Seitenflächen der letzteren sollen dann ungefähr senkrecht auf einer Gehäuse-Verbindungsebene stehen, die senkrecht auf der Fahr-Ebene 109 steht und durch die Gehäuse-Verbindungsgerade 143 verläuft. Soweit vorgängig nichts anderes geschrieben wurde, kann die Abgasanlage 111 ähnlich wie die Abgasanlage 11 ausgebildet sein und ähnliche Eigenschaften wie diese aufweisen.

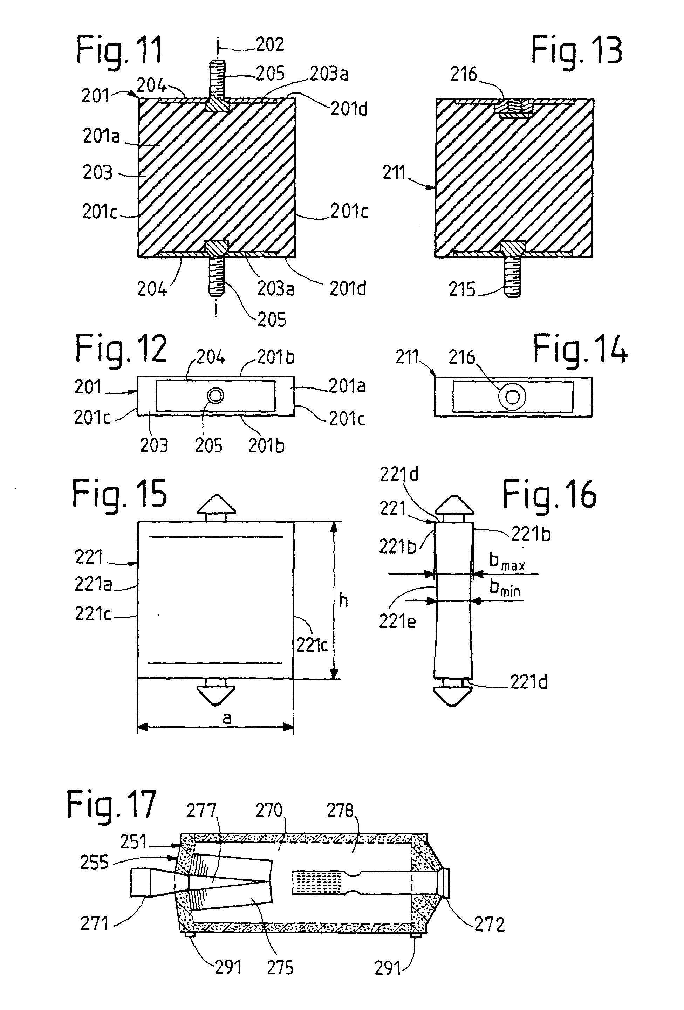

Das in den Figuren 11 und 12 ersichtliche Verbindungsorgan 201 besitzt einen quaderförmigen Hauptabschnitt 201a mit zwei breiten Seitenflächen 201b, zwei schmalen Seitenflächen 201c und zwei Auflage- und/oder Endflächen 201d. Das Verbindungsorgan 201 definiert eine Achse 202 und besteht aus einem Verbundkörper mit einem den grössten Teil des Hauptabschnitts 201a bildenden Gummikörper 203 aus natürlichem und/oder synthetischem Gummi. Der Gummikörper bildet die vier Seitenflächen 201b, 201c und hat bei seinen Enden eine Ausnehmung 203a. Jede Ausnehmung 203a enthält ein ebenes Plättchen 204. Die Plättchen 204 und die diese umschliessenden Ränder des Gummikörpers 203 bilden zusammen die ebenen Auflage- und/oder Endflächen 201d des Verbindungsorgans 201. Jede Ausnehmung 203a enthält ferner den Kopf einer zur Achse 202 koaxialen Schraube, die ein Loch des Plättchens durchdringt, einen vom Hauptabschnitt 201a wegragenden Gewindeteil hat sowie Befestigungs- und/oder Verbindungsmittel 205 bildet. Die beiden Plättchen 204 sowie die Befestigungs- und/oder Verbindungsmittel 205 bestehen aus einem metallischen Material, beispielsweise Stahl und sind durch Angiessen und/oder Anvulkanisieren des Gummis und/oder durch Verkleben oder dergleichen fest sowie unlösbar mit dem Gummikörper verbunden. Der Gummikörper bildet einen kompakten Block und hat zwischen den durch die Plättchen 204 und Befestigungs- und/oder Verbindungsmittel 205 ausgefüllten Ausnehmungen einen vollen Querschnitt.

Das in den Figuren 13 und 14 ersichtliche Verbindungsorgan 211 besteht ähnlich wie das Verbindungsorgan 201 aus einem Verbundkörper mit einem Gummikörper, zwei Plättchen sowie Befestigungs- und/oder Verbindungsmitteln 215, 216. Die einen Befestigungs- und/oder Verbindungsmittel 215 sind wie beim Verbindungsorgan 201 schraubenförmig. Die anderen Befestigungs- und/oder Verbindungsmittel 216 sind durch eine vom Gummikörper her in das Loch des Plättchens hineinragende Gewindebuchse oder Mutter gebildet, deren Gewindebohrung an dem sich tiefer im Gummikörper befindenden Ende des Befestigungselements durch eine Scheibe verschlossen ist.

Das in den Figuren 15, 16 gezeichnete Verbindungsorgan 221 besteht gleich wie die Verbindungsorgane 87 aus einem einstückigen Gummikörper und hat einen blockförmigen Hauptabschnitt 221a mit zwei breiten Seitenflächen 221b, zwei schmäleren Seitenflächen 221c und zwei Auflage- und/oder Endflächen 221d. Das Verbindungsorgan 221 unterscheidet sich jedoch dadurch von den Verbindungsorganen 87, dass die breiten Seitenflächen 221c in einem axialen Schnitt mindestens zum Teil eingebuchtet und konkav gebogen sind. Der Hauptabschnitt hat daher in mittlerer Höhe eine Dicke bₘᵢₙ, die kleiner ist als die Dicke bₘₐₓ bei den Auflage- und/oder Endflächen 221d. Das Verhältnis zwischen der Breite a und der Dicke ist dann in der Mitte zwischen den beiden Auflage- und/oder Endflächen 221d gleich a/bₘᵢₙ und kann beispielsweise bis ungefähr 10 betragen. Das Verhältnis zwischen der Höhe h und der minimalen Dicke bₘᵢₙ kann dann etwa im Bereich von 2 bis 10 liegen.

Man kann die Verbindungsorgane 87 der Abgasanlage 11 und die entsprechenden Verbindungsorgane der Abgasanlage 111 vollständig oder mindestens teilweise durch Verbindungsorgane 201 oder 211 oder 221 ersetzen. Das bzw. jedes Verbindungsorgan 211 kann dann beispielsweise durch die Verbindungsmittel 215 mit einem Halteorgan und durch die Befestigungsmittel 216 mit dem Fahrzeugboden oder umgekehrt verbunden werden. Der Fahrzeugboden 4 kann dann dementsprechend mit angeschweissten Gewindebuchsen oder Gewindebolzen oder dergleichen versehen werden. Des weiteren kann man Merkmale der Verbindungsorgane 87, 201, 211, 221 miteinander kombinieren und beispielsweise Verbindungsorgane vorsehen, die an einem Ende einen pilzförmigen Fortsatz aus Gummi und am anderen Ende eine Schraube oder Gewindebuchse oder an beiden Enden Gewindebuchsen aufweisen. Ferner können Verbindungsorgane vorgesehen werden, die mindestens an einem Ende einen wie bei einer Blechschraube ausgebildeten Gewindeteil aufweisen oder zum Annieten oder Anschweissen ausgebildet sind. Die schmalen Seitenflächen der Hauptabschnitte der mindestens teilweise gummielastischen, nicht rotationssymmetrischen Verbindungsorgane 87, 201, 211, 221 können in axialen Schnitten und/oder in zu den Achsen rechtwinkligen Schnitten eventuell konvex gebogen sein, so dass ihre mittleren Bereiche nach aussen ragen. Die rotationssymmetrischen Verbindungsorgane 67 können ebenfalls durch Verbundkörper ersetzt werden, die analog wie die Verbindungsorgane gemäss den Figuren 11 bis 14 metallische Plättchen sowie metallische Befestigungs- und/oder Verbindungsmittel aufweisen. Zudem können die Gummikörper der im allgemeinen rotationssymmetrischen Verbindungsorgane 67 vollständig zylindrisch sein oder an mindestens einem Ende einen mehrkantförmigen Endabschnitt zum Angreifen mit einem Schlüssel aufweisen oder sogar im Querschnitt im wesentlichen vollständig die Form eines regelmässigen Polygons, etwa eines 6-oder 8-Ecks haben.

Die in Fig. 17 ersichtliche Vorrichtung 251 bildet einen kombinierten Katalysator-Schalldämpfer und weist ein längliches Gehäuse 255 auf. Das Gehäuse 255 enthält beispielsweise ähnlich wie die Schalldämpfer-Gehäuse des Auspuffs 12 zwei gasdurchlässige Zwischenwände, einen gasdurchlässigen Innenmantel sowie wärmeisolierende und schallabsorbierende FaserMaterialien. Das Gehäuse, die Zwischenwände und der Innenmantel können ähnlich ausgebildet sein und ähnliche Wanddicken haben wie bei den Schalldämpfern des Auspuffs 12.

Die Zwischenwände und der Innenmantel begrenzen einen hohlen Innenraum 270. Das Gehäuse 255 ist bei seinen Endwänden mit einem Einlass 271 bzw. einem Auslass 272 versehen und enthält Katalysatormittel 275. Diese unterteilen den Innenraum 270 in einen ersten, inneren Innenraumbereich 277 sowie einen zweiten, äusseren Innenraumbereich 278. Der Einlass 271 mündet in den ersten Innenraumbereich 277. Der Auslass 272 ist durch ein Schalldämpfer-Rohr gebildet, das in den zweiten Innenraumbereich 278 hineinragt. Die Katalysatormittel 275 dienen zur katalytischen Reinigung des Abgases und besitzen eine Vielzahl von Durchgängen, die den ersten mit dem zweiten Innenraumbereich verbinden. Die Katalysatormittel 275 können beispielsweise zwei V-förmig angeordnete Katalysatorkörper aufweisen und ähnlich ausgebildet sein, wie es aus der US 5 593 645 A und der entsprechenden EP 0 676 535 A bekannt ist. Der Inhalt dieser Publikationen wird hiermit in diese Anmeldung einbezogen, soweit sich keine Widersprüche ergeben.

Die sowohl zur katalytischen Abgasreinigung als auch zur Schalldämpfung dienende Vorrichtung 251 kann beispielsweise anstelle des ersten Schalldämpfers 21 in den in Fig. 1 ersichtlichen Auspuff 12 eingebaut werden. Der Katalysator 14 des Auspuffs 12 dient dann nur noch als Vor- und/oder Start-Katalysator und kann relativ klein bemessen werden. Die Vorrichtung 251 kann auch den Katalysator 120 und den ersten Schalldämpfer 122 des in den Figuren 9, 10 gezeichneten Auspuffs 112 ersetzen. Das Gehäuse 255 der Vorrichtung 251, d.h. des kombinierten Katalysator-Schalldämpfers bildet in beiden genannten Fällen das erste stromabwärts von den deformierbaren Leitungselementen 16, 18 bzw. 116, 118 angeordnete Gehäuse und kann mit Haltern 291 am Fahrzeugboden gehalten werden, deren Verbindungsorgane analog wie die Verbindungsorgane 67 im wesentlichen rotationssymmetrisch zu einer Achse sind.

Das Kraftfahrzeug und dessen Abgasanlage können noch auf verschiedene Weise geändert werden.

Man kann insbesondere auch Merkmale von verschiedenen Ausführungsbeispielen miteinander kombinieren. Man kann beispielsweise bei dem in den Figuren 9 und 10 gezeichneten Auspuff 112 noch einen Vor- und/oder Start-Katalysator vorsehen, der analog wie der Katalysator 14 in Fig. 1 starr mit der Einlass- und Sammelvorrichtung 113 verbunden und stromaufwärts vom ersten elastisch deformierbaren Leitungselement angeordnet ist.

Die Achsen der stromabwärts von den deformierbaren Leitungselementen angeordneten Auspuffteile können ferner alle in der gleichen vertikalen, zur Fahrzeug-Längsrichtung parallelen Ebene liegen. Dementsprechend liegen dann auch die den Gehäuse-Verbindungsgeraden 43, 142, 143 entsprechenden Geraden in dieser vertikalen Ebene.

Die Formen der Halteorgane 65, 85 und deren Befestigung an den Gehäusen können ebenfalls modifiziert werden. Ferner können die den Halteorganen abgewandten Enden der Verbindungsorgane statt direkt am Fahrzeugboden an beispielsweise stabförmigen, metallischen Tragorganen befestigt werden, die dann ihrerseits am Fahrzeugboden befestigt werden.

Ferner können die Achsen der Verbindungsorgane statt senkrecht zur Fahr-Ebene eventuell geneigt oder parallel zu dieser angeordnet werden, wenn dies beispielsweise wegen der Form des Fahrzeugbodens zweckmässig ist. Die nicht rotationssymmetrischen Verbindungsorgane sollen dann jedoch derart angeordnet werden, dass die durch die Achse eines Verbindungsorgans und zwischen dessen schmäleren Seitenflächen hindurch verlaufende Mittel- und/oder Symmetrieebene ungefähr parallel zur Gehäuse-Verbindungsgeraden ist und dass die Achse des Verbindungsorgans ungefähr rechtwinklig zur Gehäuse-Verbindungsgeraden ist, so dass das Verbindungsorgan in einer ungefähr zur Gehäuse-Verbindungsgeraden parallelen Richtung leichter und besser deformierbar ist als in zur Gehäuse-Verbindungsgeraden rechtwinkligen Richtungen.

Des weitern kann man möglicherweise jedes Gehäuse nur mit drei mindestens zum Teil gummielastischen Verbindungsorganen mit dem Fahrzeugkörper verbinden. Die drei Verbindungsorgane sollten dann nicht alle auf ein und derselben Geraden liegen und in einer rechtwinkligen Projektion auf die Ebene vorzugsweise ein Dreieck bilden. Ferner kann man eventuell mindestens ein oder jedes Gehäuse nur mit zwei Verbindungsorganen mit dem Fahrzeugboden und/oder Gestell verbinden. Eventuell kann das erste stromabwärts von den deformierbaren Leitungselementen angeordnetes Katalysator- und/oder Schalldämpfer-Gehäuse sogar ohne gummielastische Verbindungsorgane bei einer Verbindungsstelle oder mehreren Verbindungsstellen mehr oder weniger starr am Fahrzeugkörper befestigt werden.

Wenn das Kraftfahrzeug aus einem Lastkraftwagen oder Bus oder dergleichen besteht, können die Gehäuse eventuell mindestens zum Teil am Gestell statt am Fahrzeugboden des Kraftfahrzeugs befestigt werden.

Zudem kann man anstelle der zwei deformierbaren Leitungselemente 16, 18 bzw. 116, 118 nur ein einziges deformierbares Leitungselement vorsehen.

## Patentansprüche

1. Abgasanlage für ein einen Fahrzeugkörper (2, 102) und einen Verbrennungsmotor (6, 106) aufweisendes Kraftfahrzeug (1, 101), insbesondere einen Personenkraftwagen, mit einem mit dem Verbrennungsmotor (6, 106) verbindbaren Auspuff (12, 112), der mindestens ein deformierbares Leitungselement (16, 18, 116, 118) und mindestens zwei stromabwärts von diesem angeordnete Gehäuse (35, 39, 131, 132, 133, 255) aufweist, und mit Haltemitteln (27, 151) zum Halten des Auspuffs (12, 112) am Fahrzeugkörper (2, 102), wobei das erste stromabwärts vom deformierbaren Leitungselement (16, 18, 116, 118) angeordnete Gehäuse (35, 131, 255) und das letzte Gehäuse (39, 133) eine durch die beiden Gehäuse (35, 131, 39, 133, 255) verlaufende Gerade (43, 143) definieren, **dadurch gekennzeichnet, dass** die Haltemittel (27, 151) mit dem letzten Gehäuse (39, 133) verbundene Verbindungsorgane (87, 201, 211, 221) aufweisen, die derart elastisch deformierbar sind, dass das letzte Gehäuse (39, 133) in vom restlichen Auspuff (12, 112) getrenntem Zustand durch eine am letzten Gehäuse (39, 133) angreifende, zur genannten Geraden (43, 143) parallele Kraft bezüglich des Fahrzeugkörpers (2, 102) um eine grössere Distanz ausgelenkt wird, als durch eine am letzten Gehäuse (39, 133) angreifende, gleich grosse Kraft, die rechtwinklig zur genannten Geraden (43, 143) ist.

2. Abgasanlage nach Anspruch 1, **dadurch gekennzeichnet, dass** die Haltemittel (27, 151) ausgebildet sind, um das erste Gehäuse (35, 131, 255) derart zu halten, dass dieses bei zusammengebautem Auspuff (12, 112) und/oder in vom restlichen Auspuff (12, 112) getrenntem Zustand durch eine auf das erste Gehäuse (35, 131, 255) einwirkende, konstante Beschleunigung von 10 m/s² oder konstante Kraft von 100 N in jeder beliebigen Richtung bezüglich des Fahrzeugkörpers (2, 102) höchstens 5 mm und vorzugsweise höchstens 2 mm ausgelenkt wird.

3. Abgasanlage nach Anspruch 1 oder 2, **dadurch gekennzeichnet, dass** die Haltemittel (27, 151) ausgebildet sind, um das letzte Gehäuse (39, 133) derart zu halten, dass dieses bei zusammengebautem Auspuff (12, 112) und/oder in vom restlichen Auspuff (12, 112) getrenntem Zustand durch eine auf das letzte Gehäuse (39, 133) einwirkende, konstante Beschleunigung von 10 m/s² oder eine konstante Kraft von 100 N in jeder zur genannten Geraden (43, 143) rechtwinkligen Richtung höchstens 5 mm und vorzugsweise höchstens 2 mm ausgelenkt wird.

4. Abgasanlage nach einem der Ansprüche 1 bis 3, **dadurch gekennzeichnet, dass** der Auspuff (12, 112) einen das erste Gehäuse (35, 131, 255) mit dem letzten Gehäuse (39, 133) verbindenden Auspuffabschnitt aufweist, der entlang seiner ganzen Länge im wesentlichen starr ist.

5. Abgasanlage nach einem der Ansprüche 1 bis 4, **dadurch gekennzeichnet, dass** der Auspuff (12, 112) ein zwischen dem ersten Gehäuse (131) und dem letzten Gehäuse (133) angeordnetes Gehäuse (132) aufweist, das durch mindestens teilweise gummielastische Verbindungsorgane derart am Fahrzeugkörper (102) gehalten ist, dass es bei zusammengebautem Auspuff (112) und/oder in vom restlichen Auspuff (112) getrenntem Zustand durch eine auf dieses Gehäuse (132) einwirkende, konstante Beschleunigung von 10 m/s² oder eine konstante Kraft von 100 N in einer Richtung, die rechtwinklig zu einer durch dieses Gehäuse (132) und das erste Gehäuse (131) verlaufenden Geraden (142) ist, bezüglich des Fahrzeugkörpers (102) höchstens 5 mm und vorzugsweise höchstens 2 mm ausgelenkt wird.

6. Abgasanlage nach einem der Ansprüche 1 bis 5, **dadurch gekennzeichnet, dass** die bzw. jede genannte Gerade (43, 142, 143) mindestens ungefähr durch Gehäuse-Zentren (37, 41, 135, 136, 137) der beiden Gehäuse (35, 39, 131, 132, 133) verläuft.

7. Abgasanlage nach einem der Ansprüche 1 bis 6, **dadurch gekennzeichnet, dass** jedes zum Halten des letzten Gehäuses (39, 133) dienende Verbindungsorgan (87, 201, 211, 221) einen mindestens zum Teil aus gummielastischem Material bestehenden Hauptabschnitt (87a, 201a, 221a) und bei einander abgewandten Enden von diesem angeordnete Verbindungsmittel (87e, 87f, 205, 215, 216) aufweist, von denen die einen mit dem letzten Gehäuse (39, 133) verbunden und die anderen zum Verbinden mit dem Fahrzeugkörper (2, 102) bestimmt sind und dass der gummielastische Teil des Hauptabschnitts (87a, 201a, 221a) in einem zwischen den beiden Enden hindurch verlaufenden Querschnitt rechtwinklig zur genannten Geraden (43, 143) eine Querschnittsabmessung (a) hat, die grösser ist als eine rechtwinklig zu dieser Querschnittsabmessung (a) gemessene Querschnittsabmessung (b, bₘᵢₙ, bₘₐₓ).

8. Abgasanlage nach Anspruch 7, **dadurch gekennzeichnet, dass** der aus gummielastischem Material bestehende Teil des genannten Hauptabschnitts (87a, 201a, 221a) zwischen den Verbindungsmitteln (87e, 87f, 205, 215, 216) einen vollen, vorzugsweise ungefähr rechteckförmigen Querschnitt hat.

9. Kraftfahrzeug mit einem Fahrzeugkörper (2, 102), einem Verbrennungsmotor (6, 106) und einer Abgasanlage (11, 111) nach einem der Ansprüche 1 bis 8, **dadurch gekennzeichnet, dass** der Auspuff (12, 112) der Abgasanlage (11, 111) mit dem Verbrennungsmotor (6, 106) verbunden ist und dass jedes Gehäuse (35, 39, 131, 132, 133, 255) durch die Haltemittel (27, 151) am Fahrzeugkörper (2, 102) gehalten ist.

10. Kraftfahrzeug nach Anspruch 9, **dadurch gekennzeichnet, dass** es als Personenkraftwagen ausgebildet ist, dass sein Fahrzeugkörper (2, 102) einen Fahrzeugboden (4, 104) aufweist und dass die Haltemittel (27, 151) unmittelbar an jedem Gehäuse (35, 39, 131, 132, 133, 255) angreifen und dieses mit dem Fahrzeugboden (4, 104) verbinden.

## Claims

1. Exhaust system for a motor vehicle (1, 101) having a vehicle body (2, 102) and an internal combustion engine (6, 106), in particular a car, having an exhaust (12, 112) which can be connected to the internal combustion engine (6, 106) and has at least one deformable pipe member (16, 18, 116, 118) and at least two casings (35, 39, 131, 132, 133, 255) arranged downstream of said deformable pipe member, and having retaining means (27, 151) for holding the exhaust (12, 112) on the vehicle body (2, 102), the first casing (35, 131, 255) arranged downstream of the deformable pipe member (16, 18, 116, 118), and the last casing (39, 133), defining a straight line (43, 143) passing through the two casings (35, 131, 39, 133, 255), **characterized in that** the retaining means (27, 151) have connecting members (87, 201, 211, 221) which are connected to the last casing (39, 133) and are elastically deformable in such a manner that, in a state separated from the remaining exhaust (12, 112), the last casing (39, 133) is deflected, relative to the vehicle body (2, 102), a greater distance by a force acting on the last casing (39, 133) and parallel to said straight line (43, 143) than by a force of equal magnitude acting on the last casing (39, 133) and at right angles to said straight line (43, 143).

2. Exhaust system according to Claim 1, **characterized in that** the retaining means (27, 121) are formed in order to hold the first casing (35, 131, 255) in such a way that, in the assembled exhaust (12, 112) and/or in a state separated from the remaining exhaust (12, 112), said casing (35, 131, 255) is deflected at most 5 mm and preferably at most 2 mm by a constant acceleration of 10 m/s² acting on the first casing (35, 131, 255) or constant force of 100 N, in any direction relative to the vehicle body (2, 102).

3. Exhaust system according to Claim 1 or 2, **characterized in that** the retaining means (27, 151) are formed in order to hold the last casing (39, 133) in such a way that, in the assembled exhaust (12, 112) and/or in a state separated from the remaining exhaust (12, 112), said casing (39, 133) is deflected at most 5 mm and preferably at most 2 mm by a constant acceleration of 10 m/s² acting on the last casing (39, 133) or a constant force of 100 N, in any direction at right angles to said straight line (43, 143).

4. Exhaust system according to any of Claims 1 to 3, **characterized in that** the exhaust (12, 112) has an exhaust section which connects the first casing (35, 131, 255) to the last casing (39, 133) and is essentially rigid along its entire length.

5. Exhaust system according to any of Claims 1 to 4, **characterized in that** the exhaust (12, 112) has a casing (132) which is arranged between the first casing (131) and the last casing (133) and is held on the vehicle body (102) by at least partially rubber-elastic connecting members in such a way that, in the assembled exhaust (112) and/or in a state separated from the remaining exhaust (112), it is deflected at most 5 mm and preferably at most 2 mm by a constant acceleration of 10 m/s² acting on this casing (132) or a constant force of 100 N in a direction which is at right angles to a straight line (142) passing through this casing (132) and the first casing (131), relative to the vehicle body (102).

6. Exhaust system according to any of Claims 1 to 5, **characterized in that** the or each said straight line (43, 142, 143) passes at least approximately through casing centres (37, 41, 135, 136, 137) of the two casings (35, 39, 131, 132, 133).

7. Exhaust system according to any of Claims 1 to 6, **characterized in that** each connecting member (87, 201, 211, 221) serving for holding the last casing (39, 133) has a main section (87a, 201a, 221a) consisting at least partially of rubber-elastic material and connecting means (87e, 87f, 205, 215, 216) which are arranged at opposite ends of said main section and of which one is connected to the last casing (39, 133) and the other is intended for connection to the vehicle body (2, 102), and that the rubber-elastic part of the main section (87a, 201a, 221a) has, in a cross-section passing between the two ends and at right angles to said straight line (43, 143), a cross-sectional dimension (a) which is greater than a cross-sectional dimension (b, bₘᵢₙ, bₘₐₓ) measured at right angles to this cross-sectional dimension (a).

8. Exhaust system according to Claim 7, **characterized in that** that part of said main section (87a, 201a, 221a) which consists of rubber-elastic material has a solid, preferably approximately rectangular cross-section between the connecting means (87e, 87f, 205, 215, 216).

9. Motor vehicle having a vehicle body (2, 102), an internal combustion engine (6, 106) and an exhaust system (11, 111) as claimed in any of Claims 1 to 8, **characterized in that** the exhaust (12, 112) of the exhaust system (11, 111) is connected to the internal combustion engine (6, 106) and that each casing (35, 39, 131, 132, 133, 255) is held on the vehicle body (2, 102) by the retaining means (27, 151).

10. Motor vehicle according to Claim 9, **characterized in that** said motor vehicle is formed as a car, that its vehicle body (2, 102) has a vehicle floor (4, 104) and that the retaining means (27, 151) directly engage each casing (35, 39, 131, 132, 133, 255) and connect it to the vehicle floor (4, 104).

## Revendications

1. Dispositif d'échappement pour un véhicule automobile (1, 101), notamment un véhicule de tourisme, équipé d'un corps (2, 102) et d'un moteur (6, 106) à combustion interne, comprenant un échappement (12, 112) qui peut être raccordé au moteur (6, 106) à combustion interne et présente au moins un élément de conduit (16, 18, 116, 118) déformable, et au moins deux boîtiers (35, 39, 131, 132, 133, 255) situés en aval de ce dernier ; et des moyens de retenue (27, 151) pour retenir l'échappement (12, 112) sur le corps (2, 102) du véhicule, sachant que le premier boîtier (35, 131, 255) situé en aval de l'élément de conduit (16, 18, 116, 118) déformable, et le dernier boîtier (39, 133), définissent une droite (43, 143) passant par les deux boîtiers (35, 131, 39, 133, 255), **caractérisé par le fait que** les moyens de retenue (27, 151) comportent des organes de solidarisation (87, 201, 211, 221) reliés au dernier boîtier (39, 133) et doués d'une déformabilité élastique telle que, à l'état séparé d'avec le reste de l'échappement (12, 112), le dernier boîtier (39, 133) soit dévié vis-à-vis du corps (2, 102) du véhicule, par une force agissant sur ledit dernier boîtier (39, 133) et parallèle à la droite précitée (43, 143), d'une distance plus grande que celle résultant d'une force de même intensité agissant sur le dernier boîtier (39, 133) et perpendiculaire à la droite précitée (43, 143).

2. Dispositif d'échappement selon la revendication 1, **caractérisé par le fait que** les moyens de retenue (27, 151) sont réalisés pour retenir le premier boîtier (35, 131, 255) de façon telle que, lorsque l'échappement (12, 112) est assemblé et/ou à l'état séparé d'avec le reste dudit échappement (12, 112), ledit boîtier soit dévié dans n'importe quelle direction vis-à-vis du corps (2, 102) du véhicule, au maximum de 5 mm et, de préférence, au maximum de 2 mm, par une accélération constante de 10 m/s² ou par une force constante de 100 N agissant sur ledit premier boîtier (35, 131, 255). '

3. Dispositif d'échappement selon la revendication 1 ou 2, **caractérisé par le fait que** les moyens de retenue (27, 151) sont réalisés pour retenir le dernier boîtier (39, 133) de façon telle que, lorsque l'échappement (12, 112) est assemblé et/ou à l'état séparé d'avec le reste dudit échappement (12, 112), ledit boîtier soit dévié dans n'importe quelle direction perpendiculaire à la droite précitée (43, 143), au maximum de 5 mm et, de préférence, au maximum de 2 mm, par une accélération constante de 10 m/s² ou par une force constante de 100 N agissant sur ledit dernier boîtier (39, 133).

4. Dispositif d'échappement selon l'une des revendications 1 à 3, **caractérisé par le fait que** l'échappement (12, 112) présente un tronçon d'échappement sensiblement rigide sur toute sa longueur, reliant le premier boîtier (35, 131, 255) au dernier boîtier (39, 133).

5. Dispositif d'échappement selon l'une des revendications 1 à 4, **caractérisé par le fait que** l'échappement (12, 112) comporte un boîtier (132) interposé entre le premier boîtier (131) et le dernier boîtier (133) et retenu sur le corps (102) dudit véhicule, par des organes de solidarisation au moins partiellement doués de l'élasticité du caoutchouc, de façon telle que, lorsque l'échappement (112) est assemblé et/ou à l'état séparé d'avec le reste dudit échappement (112), ledit boîtier soit dévié vis-à-vis du corps (102) du véhicule dans une direction perpendiculaire à une droite (142) passant par ce boîtier (132) et par le premier boîtier (131), au maximum de 5 mm et, de préférence, au maximum de 2 mm, par une accélération constante de 10 m/s² ou par une force constante de 100 N agissant sur ce boîtier (132).

6. Dispositif d'échappement selon l'une des revendications 1 à 5, **caractérisé par le fait que** la ou chaque droite précitée (43, 142, 143) passe respectivement, au moins approximativement, par des centres (37, 41, 135, 136, 137) des deux boîtiers (35, 39, 131, 132, 133).

7. Dispositif d'échappement selon l'une des revendications 1 à 6, **caractérisé par le fait que** chaque organe de solidarisation (87, 201, 211, 221), servant à retenir le dernier boîtier (39, 133), comprend un segment principal (87a, 201a, 221a) au moins partiellement constitué d'un matériau doué de l'élasticité du caoutchouc, et des moyens de liaison (87e, 87f, 205, 215, 216) situés à des extrémités dudit segment qui sont tournées mutuellement à l'opposé, moyens dont les uns sont reliés au dernier boîtier (39, 133), et les autres sont destinés à la liaison avec le corps (2, 102) du véhicule ; et **par le fait que** la partie du segment principal (87a, 201a, 221a) qui est douée de l'élasticité du caoutchouc présente, dans une section transversale s'étendant d'un trait entre les deux extrémités, perpendiculairement à la droite précitée (43, 143), une dimension (a) de section transversale plus grande qu'une dimension (b, b_{min,} bₘₐₓ) de section transversale mesurée perpendiculairement à cette dimension (a) de section transversale.

8. Dispositif d'échappement selon la revendication 7, **caractérisé par le fait que** la partie du segment principal précité (87a, 201a, 221a) qui est constituée d'un matériau doué de l'élasticité du caoutchouc possède, entre les moyens de liaison (87e, 87f, 205, 215, 216), une section transversale pleine de préférence approximativement rectangulaire.

9. Véhicule automobile équipé d'un corps (2, 102), d'un moteur (6, 106) à combustion interne et d'un dispositif d'échappement (11, 111) selon l'une des revendications 1 à 8, **caractérisé par le fait que** l'échappement (12, 112) du dispositif d'échappement (11, 111) est relié au moteur (6, 106) à combustion interne ; et **par le fait que** chaque boîtier (35, 39, 131, 132, 133, 255) est retenu sur le corps (2, 102) dudit véhicule par les moyens de retenue (27, 151).

10. Véhicule automobile selon la revendication 9, **caractérisé par le fait qu'**il est réalisé sous la forme d'un véhicule de tourisme ; **par le fait que** son corps (2, 102) présente un plancher (4, 104) ; et **par le fait que** les moyens de retenue (27, 151) viennent directement en prise avec chaque boîtier (35, 39, 131, 132, 133, 255) et relient ce dernier audit plancher (4, 104) du véhicule.
